# EUROPEAN PATENT APPLICATION

(11) **EP 1 020 975 A2**
(43) Date of publication of application: **19.07.2000**
(21) Application number: 00100168.4
(22) Date of filing: 11.01.2000
(51) Int. Cl.: H02K 1/12, H02K 15/02

(54) **Dynamo-electric machine stators with multiple poles, and method for winding same**

(30) Priority: 13.01.1999 US 115753 P; 06.01.2000 US 478723 P
(71) Applicant: Axis S.p.A., 50028 Tavarnelle Val di Pesa (Firenze) (IT)
(72) Inventor: Becherucci, Raffaele, 50018 Scandicci, Florence (IT); Stratico, Gianfranco, 53100 Siena (IT); Luiciani, Sabatino, 50019 Sesto Fiorentino, Firenze (IT)
(74) Representative: Heselberger, Johannes

(57) **Abstract**

A stator for a dynamo-electric machine (10) such as a motor or a generator includes a hollow annular inner structure (21) (e.g., of plastic material). Pole structures (e.g., of ferro-magnetic material) (40) are inserted in circumferentially spaced pole receptacles in the inner structure. Coils of wire (50) are wound around the pole structures from outside the inner structure. A hollow annular outer structure (30) (e.g., of ferro-magnetic material) is then disposed concentrically around the outside of the subassembly that includes the inner structure, the pole structures, and the coils. Methods for making the stator are also disclosed.

## Description

### Background of the Invention

The present invention concerns the manufacture of electric motors and generators, and similar apparatus. More specifically, the invention relates to improved stators for dynamo-electric machines, and to improved solutions for winding such stators.

Electric motors generally include two main parts -- a fixed hollow portion known as a "stator" and a portion that rotates inside the stator, called a "rotor" an "armature." Electrically conducting coils of wire are typically wound in longitudinal slots on the inside surface of the stator. Rotors/armatures are configured in many different ways, but they are also wound with electrically conducting wire. Current supplied to the rotor wires interacts with a magnetic field produced in the stator to create the torque required to operate the motor. Electrical generators have stators and rotors that are similar in a general way to those described above for electric motors.

Various types of machines are available to coil wire on stator cores. However, relatively complex motions of the wire dispensing structure may be required because the wire must be wound around radially inwardly projecting poles to which access is somewhat restricted. This tends to limit the speed at which stator coils can be wound, as compared, for example, to the speed at which coils can be wound (e.g., by a conventional flyer winder) on the more accessible, radially outwardly extending poles of a rotor or armature. The more poles that a stator has, the more severe the problem of relatively slow stator coil winding becomes.

In view of the foregoing, it is an object of this invention to provide improved multi-pole dynamo-electric machine stators that can be more readily wound with the required coils of wire.

It is another object of this invention to provide improved methods and apparatus for winding coils on multi-pole dynamo-electronic machine stators.

It is a more particular object of this invention to provide multi-pole dynamo-electric machine stators that can be more readily produced using flyer-type winders to wind the required coils of wire on the poles of the stator.

It is another more particular object of the invention to provide methods and apparatus that facilitate the production of multi-pole dynamo-electric machine stators using flyer-type winders to wind the required coils of wire on the poles of the stator.

### Summary of the Invention

These and other objects of the invention are accomplished in accordance with the principles of the invention by providing a hollow annular inner structure (e.g., of a plastic material) configured to hold a plurality of radially and axially extending pole structures (e.g., of ferro-magnetic material) that are spaced from one another in the annular or circumferential direction around the hollow inner structure. Each pole structure may be inserted into a respective pole receptacle or seat in the inner structure by moving the pole structure radially outwardly from the hollow interior of the inner structure. The annular exterior of the inner structure has a geometry somewhat like the annular exterior of a dynamo-electric machine rotor or armature. Thus a flyer-type winder can be used to wind coils of wire relative to the poles in the inner structure. After the coils are in place, the stator is completed by surrounding the subassembly that includes the inner structure, the pole structure, and the coils with another hollow annular outer structure (e.g., of ferro-magnetic material). Radially outer portions of the pole structures are preferably secured to this outer structure (e.g., by interlocking with that outer structure) to help hold the entire stator together.

Further features of the invention, its nature and various advantages will be more apparent from the accompanying drawings and the following detailed description of the preferred embodiments.

### Brief Description of the Drawings

FIG. 1 is a simplified axial end view of a completed stator in accordance with the invention.
FIG. 2 is an axial end view of one component of the stator of FIG. 1.
FIG. 3 is an enlargement of representative portions of components used in the stator of FIG. 1.
FIG. 4 is an axial end view of another component of the stator of FIG. 1.
FIG. 5 is a view similar to FIG. 2 showing how pole structures may be inserted into the component shown in FIG. 2.
FIG. 6 is another view similar to FIG. 2 after all the pole structures have been inserted into the component shown in FIG. 2.
FIG. 7 is a view taken in direction B in FIG. 6 after wire has been wound on the components shown in FIG. 6.
FIG. 8 is a partial elevational view of illustrative apparatus for winding wire on the components shown in FIG. 6 in accordance with the invention.

### Detailed Description of the Preferred Embodiments

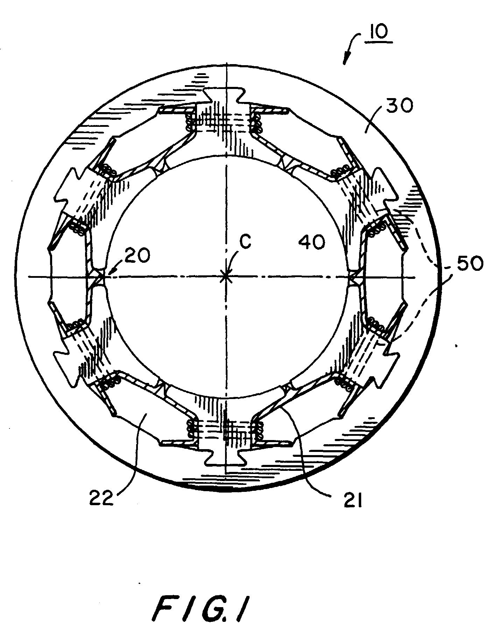

Turning now to the drawings, which are provided to illustrate embodiments of the invention and not for limiting same, an exemplary stator assembly 10 is depicted in FIG. 1. As shown, stator assembly 10 includes a hollow annular interior support member ("inner structure") 20 placed within the circumference of a hollow annular outer structure 30. Pole structures 40 extend radially through apertures ("pole receptacles") 21 in inner structure 20 into engagement with outer structure 30 at equal angular intervals in the circumferential direction around stator 10.

While many available materials are acceptable for manufacturing the respective components of stator 10, inner structure 20 is preferably made from an electrically insulating material. A plastic composite is one example of a material that has advantageous effects. Inner structure 20 is preferably one integral structure. Outer structure 30 and pole structures 40 are preferably made from a ferro-magnetic material. Outer structure 30 is preferably a continuous ring in the circumferential direction, although it may be made up of a stack of relatively thin laminations, each having the ring shape shown in FIG. 1. Pole structure 40 are preferably separate from one another, and each may also be made up of a stack of relatively thin laminations parallel to the laminations described above as possible for use in making outer structure 30.

As is also shown in FIG. 1, coils 50 of wire are wound around all of pole structures 40 in channels 22 in the exterior of inner member 20. For simplicity and to better reveal other features of the invention, coils 50 are shown in FIG. 1 and other FIGS. much smaller and with fewer turns than they would typically have in actual practice. These wire coils 50 convey electrical current through stator 10 when the stator is part of an operating dynamo-electric machine. Channels 22 may be placed in any desired arrangement. For example, the number of poles to be used and the amount of wire that will be passed through channels 22 must be considered in selecting the number and size of channels 22. As one illustration of this, winding coils with large numbers of turns will typically require relatively wide channels 22, while winding coils with fewer turns may allow channels 22 to be made smaller and placed closer together. From the foregoing it will be appreciated that stator 10 with six poles spaced apart by angles of 60 degrees is shown herein for purposes of illustration only, and that many other configurations are equally possible.

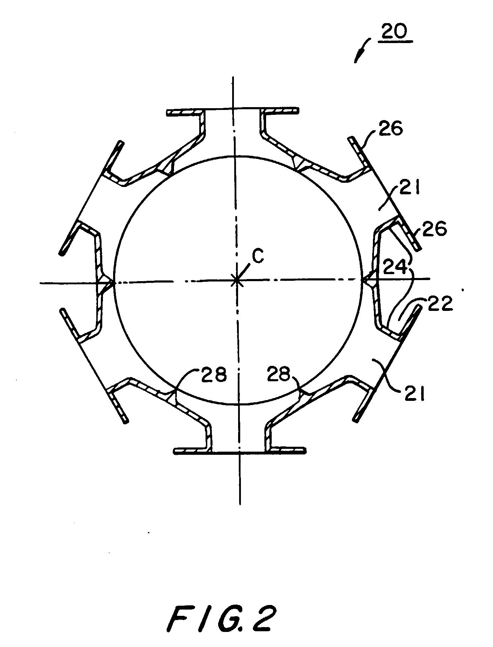

Turning now to FIG. 2, in the illustrative embodiment of the invention, pole receptacles 21 and channels 22 are separated from one another by walls 24 of inner structure 20 that extend in an outward radial direction from the central axis C of inner structure 20. Channels 22 may also include retaining flanges 26 which extend in a generally circumferential direction. Flanges 26 help place wire coils 50 around walls 24 and maintain them in proper position. Portions 28 of inner structure 20 connect the inner structure between circumferentially adjacent pole receptacles and help the inner structure to maintain its shape and to function as a single piece. Portions 28 also bridge gaps between pole structures 40 in the assembled stator and thereby reduce the noise that may be produced by the spinning rotor or armature in the finished dynamo-electric machine.

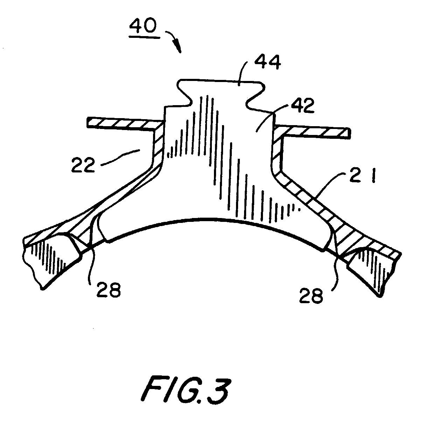

A detailed illustration of a pole structure 40 that may be used with the invention is provided in FIG. 3. The main body of each pole 40 has a size and shape that allows it to fit tightly inside an associated pole receptacle 21 and remain in firm contact with it using only frictional forces. While friction forces are the preferred manner of maintaining contact between poles 40 and inner structure 10 at this stage in the operation, there are other acceptable ways of performing this function. For example, poles 40 could fit loosely in receptacles 21 and be held in place by one or more support beams, clips or similar devices located along either circumference of inner structure 20. Poles 40 could also be held in place using an adhesive. It is intended to embrace all of these and similar alternatives, and the invention is not limited to the use of friction forces to hold poles 40 in place in channels 22.

With continued reference to FIG. 3, pole structure 40 may optionally include a dove-tail-shaped protrusion 44 located on its outside surface -- the most distant surface from central axis C of inner structure 20. While protrusion 44 is present in the preferred embodiment of the invention, it is not required when alternative means are provided for coupling poles 40 to outer structure 30, as will become evident in view of the following discussion.

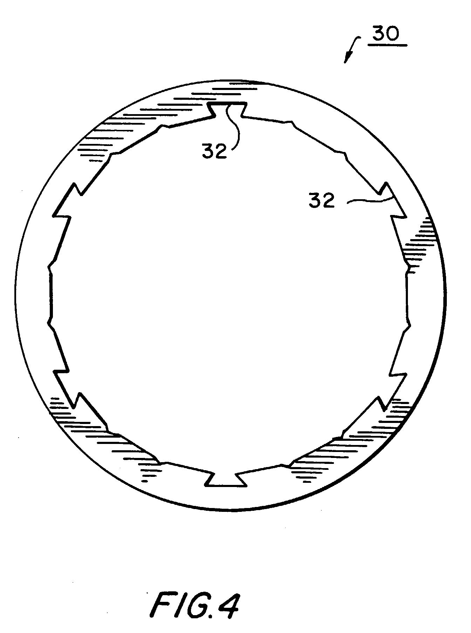

FIG. 4 shows a detailed illustration of outer structure 30. In the preferred embodiment of the invention, outer structure 30 includes dove-tail-shaped recesses 32 dispersed throughout its inside circumference. Recesses 32 are configured to receive and securely mate with protrusions 44 to couple poles 40 and inner structure 20 to outer structure 30 in the assembled stator. The shape of recesses 32 therefore complements the shape of protrusions 44, and recesses 32 are located to correspond to the locations of protrusions 44. In other words, when the stator includes poles 40 such as those shown in FIG. 3 with protrusions 44, recesses 32 such as those depicted in FIG. 4 will be provided. However, if the stator includes poles 40 that have, for example, recessed areas placed on their radially outermost surface instead of protrusions 44, outer structure 30 may include complementary protrusions in the corresponding locations. If poles 40 provide some other attachable region, outer structure 30 will preferably include a mating or otherwise corresponding region. In any event, the inside circumference of outer structure 30 and the radially outermost surfaces of poles 40 (or anything that may be used to assist in joining them) will preferably be shaped such that they fit together and allow for successful joining of the poles and inner structure, on the one hand, and the outer structure, on the other hand. As described earlier, adhesives, clips, and/or other supports can also be used to join poles 40 and inner structure 20 to outer structure 30.

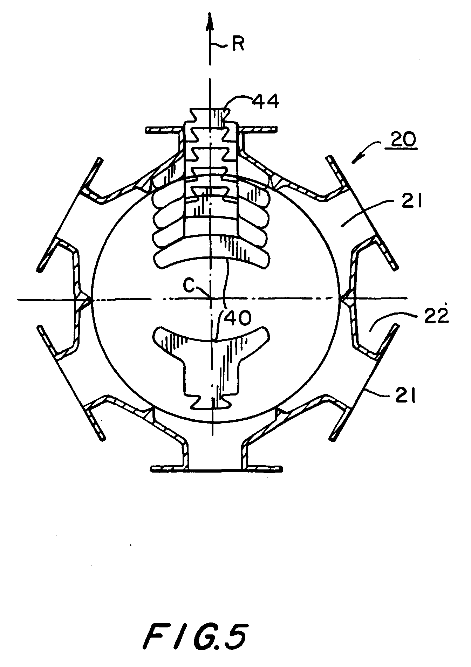

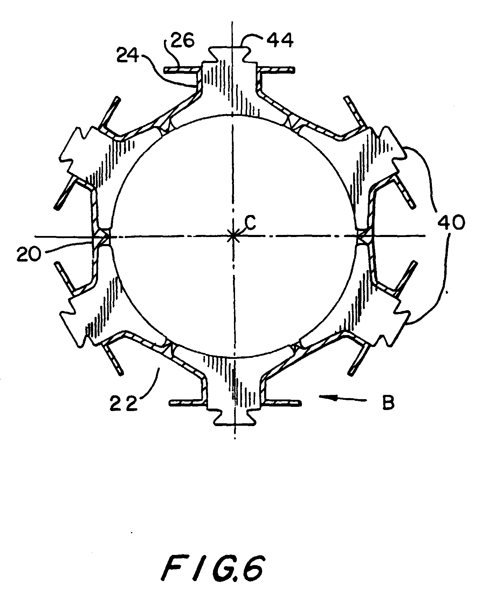

Referring now to FIG. 5, in a preferred embodiment of the invention, each pole structure 40 is inserted in the associated pole receptacle 21 by first placing it inside the circumference of inner structure 20 at or near central axis C and then moving the pole radially outward as indicated by the exemplary direction R. As stated earlier, each pole 40 will preferably form a tight fit in the associated receptacle 21 and remain in place due to frictional forces. Once all poles 40 are placed in receptacles 21, the completed inner structure and pole assembly will be as shown in FIG. 6. Protrusions 44 will preferably extend past the outer surfaces of retaining flanges 26, to permit a subsequent tight fit with recesses 32 in outer structure 30.

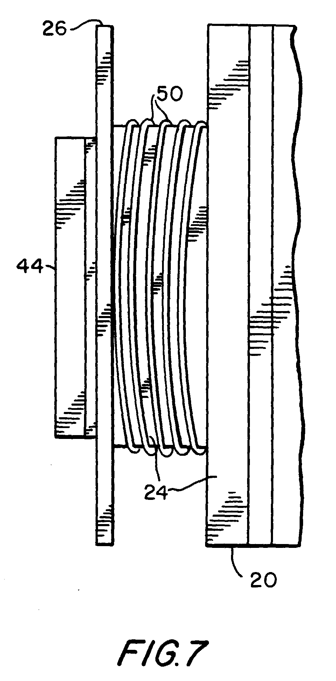

According to another aspect of the invention, wire coils 50 may be efficiently placed on the stator subassembly shown in FIG. 6. These coils 50 of wire are preferably wound around poles 40 in channels 22 as first illustrated in FIG. 1, and as is also shown in the view provided in FIG. 7.

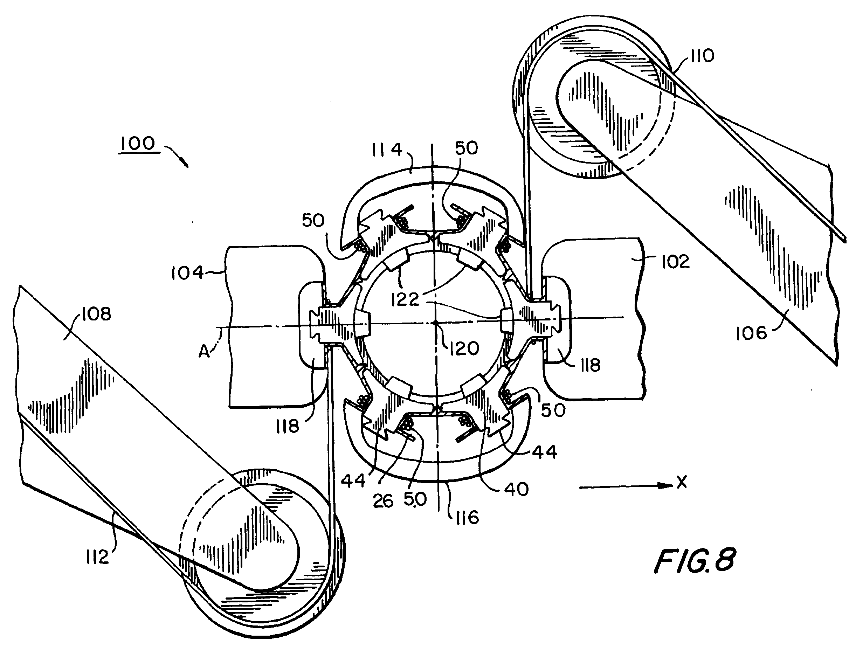

Once pole structures 40 have been inserted in inner structure 20, the entire unit (best illustrated in FIG. 6) may be placed in a double flyer winder 100 as shown in FIG. 8. Alternatively, inner structure 20 may be placed in double flyer winder 100 by itself, and poles 40 may be inserted after winding takes place, although it is preferred for poles 40 to be in place prior to winding to reinforce inner structure 20 and to avoid possible greater difficulty of inserting the poles after the coils have been wound. Further, while the invention is described here in conjunction with a double flyer winder, winders that have only one flyer, or more than two flyers could also be used. Winder 100 may be similar to those long known and used in the art for winding coils of wire on dynamo-electric machine armatures (see, for example, Cardini et al. U.S. patent 5,383,619, Lombardi et al. U.S. patent 5,383,620, Cardini et al. U.S. patent 5,572,787, Cardini et al. U.S. patent 5,576,585, Sbalchiero et al. U.S. patent 5,628,472, and Cardini et al. U.S. patent 5,639,044, all of which are hereby incorporated by reference herein in their entireties).

Double flyer winder 100 includes wire guides 102 and 104. In the example shown, flyer or wire dispenser 106 rotates about axis A, drawing wire from source 110 and wrapping it around the outside of an adjacent pole receptacle 21. Similarly, flyer or wire dispenser 108 rotates about the same axis A, drawing wire from source 112 and wrapping it around the outside of an adjacent pole receptacle, which is diametrically opposite the pole served by flyer 106.

Wire guides 102 and 104 assist in bringing the wire past retaining flanges 26 and into the spaces between each pole receptacle 21 being wrapped and the other pole receptacles that are circumferentially adjacent to that pole receptacle as the wire is drawn from sources 110 and 112. Central guides 114 and 116 may additionally be provided to cause any misplaced wire to ride down their surfaces, which also helps guide the wire into the spaces between adjacent pole receptacles 21. Wire guides 102 and 104 may also be capable of translating in either direction along axis X to assist in distributing wire along walls 24. Wire guides 102 and 104 may include recessed regions 118 to better accommodate retaining flanges 26 and protrusions 44.

Still referring to FIG. 8, a gripper 120 may also be provided with double flyer winder 100 to facilitate winding of coils 50 around a plurality of pole receptacles 21. Gripper 120 may be used to place an outward radial load on the inside circumference of inner structure 20 and poles 40. In one embodiment of the invention, this radial load is applied using expandable keys 122, which push against the inside surfaces of poles 40, and the inside circumference of inner structure 20. Once wire coils have been placed on a diametrically opposite pair of pole receptacles 21, the outward radial load allows gripper 120 to support inner member 20 and rotate it about central axis C, removing the wound pole receptacles 21 from their alignment with flyers 106 and 108 and aligning an unwound pair. Subsequent winding and rotating may occur until all pole receptacles 21 are wound. Leads of wire coils 50 can be terminated using conventional grippers and cutters presently available in the art.

Inner structure 20 and wound pole receptacles 21 may then be connected to outer structure 30, to produce the assembly shown in FIG. 1. The preferred embodiment of the invention includes joining inner structure 20 and poles 40 to outer structure 30 by first co-axially aligning pole protrusions 44 with outer structure recesses 32. The two subassemblies may then be moved relative to one another into the same plane and attached together so that protrusions 44 are placed in recesses 32, causing inner structure 20 and outer structure 30 form a single assembly. This preferably includes attaching the parts using a slightly forced fit so the assembly is held together at least partly by friction forces. Again, other embodiments of the invention may modify or omit certain of these steps. For example, the process of coupling inner structure 20 and poles 40 to outer structure 30 will depend upon the shape and size of poles 40 or other coupling devices that are used. As another example of a modification within the scope of the invention, outer structure 30 could be wrapped around the subassembly of elements 20, 40, and 50, (e.g., by rotating that subassembly about central axis C and using the rotating subassembly to draw onto itself in helical form a continuous strip of outer structure material).

Once a stator has been formed in the manner shown and described herein, an electric motor may be assembled by placing a rotor or armature coaxially inside the stator. When the motor is appropriately supplied with electrical power, the rotor/armature will rotate about central axis C to produce an output torque. Alternatively the stator may be used as part of an electrical generator in which a rotor is rotatably mounted coaxially inside the stator. When the rotor is rotated, electrical power is produced.

From the foregoing it will be apparent that there has been provided in accordance with the present invention multi-pole stators and methods and apparatus for winding multi-pole stators that fully satisfy the aims and advantages hereinbefore set forth. While this invention has been described in conjunction with specific embodiments thereof, it will be appreciated that many alternatives, modifications, and variations will be apparent to those skilled in the art. Accordingly, it is intended to embrace all such alternatives, modifications and variations that fall within the spirit and broad scope of the appended claims.

## Claims

1. A stator assembly for a dynamo-electric machine comprising:
a plurality of initially separate pole structures;
a hollow annular inner structure configured to receive and support the pole structures in an annular array that is concentric with the inner structure, the inner structure being further configured to permit wire to be wound concentrically around each pole structure from outside the inner structure;
a plurality of coils of the wire, each of the coils having been wound concentrically around a respective one of the pole structures from outside the inner structure; and
a hollow annular outer structure configured to concentrically receive within itself a subassembly that includes the inner structure, the pole structures, and the coils.

2. The stator assembly defined in claim 1 wherein the inner structure is further configured to receive each pole structure by radial outward movement of the pole structure from the hollow interior of the inner structure.

3. The stator assembly defined in claim 1 wherein the inner structure includes a plurality of circumferentially spaced, radially extending pole receptacles, each of which is configured to receive and support a respective one of the pole structures.

4. The stator assembly defined in claim 1 wherein when the pole structures are received and supported in the inner structure, a radially outer portion of each pole structure is configured to interengage with a respective inner surface portion of the outer structure.

5. The stator assembly defined in claim 4 wherein interengagement between each pole structure and the outer structure is such as to prevent movement of the pole structure radially relative to the outer structure.

6. The stator assembly defined in claim 5 wherein the interengagement between the pole structures and the outer structure prevents rotation of the subassembly relative to the outer structure about an axis with which the subassembly and the outer structure are concentric.

7. The stator assembly defined in claim 1 wherein the inner structure comprises a plastic material, and wherein the pole structures and the outer structure comprise a ferro-magnetic material.

8. The stator assembly defined in claim 1 wherein each of the coils is wound around a portion of the inner structure that concentrically surrounds the pole structure that the coil is concentric with.

9. The stator assembly defined in claim 8 wherein the inner structure includes a radially outer flange for retaining each of the coils on the portion of the inner structure around which that coil is wound.

10. The method of making a stator assembly for a dynamo-electric machine comprising:
providing a hollow annular inner structure that includes a plurality of circumferentially spaced pole receptacles;
inserting a pole structure into each of the pole receptacles;
winding a coil of wire concentrically around each pole structure from outside the inner structure to produce a subassembly that includes the inner structure, the pole structures, and the coils; and
providing a hollow annular outer structure concentrically around the outside of the subassembly.

11. The method defined in claim 10 wherein the providing a hollow annular outer structure concentrically around the outside of the subassembly comprises:
engaging a radially outer portion of each of the pole structures with the outer structure.

12. The method defined in claim 11 wherein the engaging prevents subsequent radial and circumferential movement of each pole structure relative to the outer structure.

13. The method defined in claim 10 wherein the outer structure is preformed, and wherein the providing of that structure around the outside of the subassembly comprises:
coaxially aligning the subassembly and the outer structure; and
causing coaxial movement between the subassembly and the outer structure to position the subassembly inside the outer structure.

14. The method defined in claim 10 wherein the inserting comprises:
disposing each pole structure in the hollow interior of the inner structure; and
moving each pole structure radially out from the hollow interior of the inner structure into a respective one of the pole receptacles.

15. The method defined in claim 10 wherein the winding comprises:
rotating a wire dispensing element about an axis which is radial of the inner structure and which passes through one of the pole structures to wind a coil of wire concentrically around that pole structure, the wire dispensing element remaining outside of the inner structure during the rotating.

16. The method defined in claim 15 wherein the winding further comprises:
positioning wire guiding structure outside of the inner structure and annularly around the axis adjacent to the pole structure through which the axis passes to guide wire from the wire dispensing element to a coil location which is concentrically around the pole structure.

17. The method defined in claim 16 wherein the positioning comprises:
shifting the wire guiding structure along the axis during the winding to distribute the wire along the coil location parallel to the axis.

18. The method defined in claim 15 wherein the winding further comprises:
positioning wire shielding structure outside the inner structure and over pole structures that are circumferentially adjacent to the pole structure through which the axis passes to prevent the circumferentially adjacent pole structures from interfering with the wire during winding of the wire around the pole structure through which the axis passes.

19. The method defined in claim 15 wherein the pole receptacles are disposed in the inner structure in diametrically opposite pairs, wherein the axis also passes through a second pole structure which is diametrically opposite the one of the pole structures, and wherein the winding further comprises:
rotating a second wire dispensing element about the axis adjacent to the second pole structure to wind a coil of wire concentrically around the second pole structure concurrently with the winding of the coil of wire around the one of the pole structures, the second wire dispensing element remaining outside of the inner structure during its rotating.
